# EUROPÄISCHE PATENTSCHRIFT

(11) **EP 1 927 244 B1**
(45) Veröffentlichungstag und Bekanntmachung des Hinweises auf die Patenterteilung: **15.04.2015**
(21) Anmeldenummer: 06778347.2
(22) Anmeldetag: 24.08.2006
(51) Int. Cl.: H04M 3/54

(54) **VERFAHREN UND VORRICHTUNG ZUM ENERGIESPARENDEN BETRIEB EINES KOMMUNIKATIONSENDGERÄTS**
METHOD AND DEVICE FOR ENERGY-SAVINGLY OPERATING A COMMUNICATION TERMINAL
PROCEDE ET DISPOSITIF POUR L'EXPLOITATION, AVEC ECONOMIE D'ENERGIE, D'UN TERMINAL DE COMMUNICATION

(30) Priorität: 21.09.2005 DE 102005045115
(43) Veröffentlichungstag der Anmeldung: 04.06.2008
(73) Patentinhaber: Unify GmbH & Co. KG, 81379 München (DE)
(72) Erfinder: ACKERMANN-MARKES, Achim, 82237 Wörthsee (DE)
(74) Vertreter: Fritzsche, Thomas
(86) Internationale Anmeldenummer: PCT/EP2006/065625
(87) Internationale Veröffentlichungsnummer: WO 2007/033880

(56) Entgegenhaltungen:
- WO-A-01/15416
- DE-A1- 10 063 098
- JP-A- 2001 333 208

## Beschreibung

Die Erfindung betrifft ein Verfahren zum energiesparenden Betrieb eines Kommunikationsendgeräts sowie ein entsprechend ausgestaltetes Kommunikationsendgerät, insbesondere Tischtelefon.

Im Stand der Technik sind drahtlose Kommunikationsendgeräte bekannt, welche aus Gründen der Energieersparnis abschaltbar sind. Ein Beispiel für derartige drahtlose Kommunikationsendgeräte sind zelluläre Telefone. Eine Energieersparnis bedeutet für diese drahtlosen Kommunikationsendgeräte insbesondere eine Erhöhung der Laufzeit eines in diesen Geräten integrierten Akkus.

In WO 01/15416 A1 ist ein Verfahren zur Implementierung und Aktualisierung einer Routing-Liste in einem Kommunikationsnetzwerk beschrieben. Wenn ein Endgerät einen Ruhezustand annimmt, wird eine Verbindung vom Endgerät zu einer Steuerungseinheit zur Verwaltung einer Routing-Liste aufgebaut. Nachfolgend wird die Routing-Liste in der Steuerungseinheit derart aktualisiert, dass ein ankommender Anruf zu einem von dem Endgerät im Ruhezustand unterschiedlichen Endgerät umgeleitet wird.

Im Stand der Technik sind weiterhin Kommunikationsendgeräte bekannt, für welche ein solches Abschalten nicht vorgesehen ist. Dabei gibt es verschiedene Gründe, warum ein Abschalten für derartige Kommunikationsendgeräte nicht notwendig oder nicht statthaft ist:
- Ein ohnehin niedriger Energieverbrauch herkömmlicher analoger Tischtelefone. Tischtelefone, welche über eine Zuleitung mit elektrischer Energie versorgt werden und aus diesem Grund über keinen Akku verfügen, dessen Laufzeit durch eine Abschaltung zu verlängern wäre.
- Eine Möglichkeit des Abschaltens von drahtgebundenen Kommunikationsendgeräten bzw. Tischtelefonen für den Firmengebrauch ist in einigen Ländern rechtlich nicht zulässig, insbesondere in den Vereinigten Staaten von Amerika, in denen Notfallszenarien rechtlich - E911-Regularien - geregelt sind.

Für die genannten Kommunikationsendgeräte, welche nicht über eine Abschaltfunktion verfügen bzw. notwendigerweise ständig betriebsbereit gehalten werden, wird oftmals auch von einem so genannten »Always-on-Device« gesprochen.

Aufgabe der Erfindung ist es, einen Verbrauch an elektrischer Energie für Endgeräte, bei denen ein Abschalten nicht vorgesehen ist, zu senken und gleichzeitig deren Charakter als »Always-on-Device« beizubehalten.

Eine Lösung der Aufgabe erfolgt durch ein Verfahren mit den Merkmalen des Patentanspruchs 1, durch ein Kommunikationsendgerät mit den Merkmalen des Patentanspruchs 7 sowie durch ein Tischtelefon mit den Merkmalen des Patentanspruchs 10.

Die Erfindung ist von der Idee getragen, einen Ruhezustand bzw. Stand-By-Modus vorzusehen, in welchen bei einem Eintritt von vermittlungstechnischen Zuständen bzw. Leistungsmerkmals eingetreten wird, bei denen das Kommunikationsendgerät vorübergehend oder dauerhafter nicht erreichbar ist.

Vorteilhafte Weiterbildungen der Erfindung sind in den Unteransprüchen angegeben.

In einer vorteilhaften Weiterbildung ist vorgesehen, den Ruhezustand bzw. Stand-By-Modus in folgenden Situationen zu verlassen:
- Bei einem Abheben des Handapparats bzw. »Hörers«
- Bei Betätigung einer beliebigen Taste am Kommunikationsendgerät
- Bei Aktivierung durch die Kommunikationseinrichtung. Eine solche Aktivierung durch die Kommunikationseinrichtung erfolgt beispielsweise über eine spezielle Meldung. Wird die Meldung über ein paketorientiertes Netzwerk, an welches das Kommunikationsendgerät - beispielsweise ein VoIP-Kommunikationsendgerät - angeschlossen ist, übertragen, bezeichnet man diese auch als WOL (»Wakeup On LAN« bzw. »Wakeup On Local Area Network«).

Eine weitere vorteilhafte Weiterbildung der Erfindung sieht vor, dass bei einem Übergang vom Ruhezustand in einem aktiven Modus eine zu erwartende Wartezeit an einer Ausgabeeinheit des Endgeräts angezeigt wird. Dies kann z.B. mit einer Textmeldung »Bitte warten« erfolgen.

Ein Wechsel in den aktiven Modus erfolgt z.B. nach Abheben des Handapparats am Kommunikationsendgerät.

Eine nächste Weiterbildung sieht vor, nach Abheben des Handapparats ein Tonsignal auszugeben, das akustisch einem »Freizeichen« entspricht. Das Tonsignal entspricht dabei funktionell nicht einem Freizeichen, gibt aber einem Teilnehmer das Gefühl, dass das Kommunikationsendgerät, welches sich derzeit noch im Ruhezustand befindet und erst in den aktiven Modus wechselt, bereits funktionsfähig ist.

Eine besonders vorteilhafte Ausgestaltung der Erfindung betrifft eine zusätzliche Zuordnung zu einem Ruhezustand bei einer Aktivierung von Leistungsmerkmalen, welche zur Folge haben, dass ein für den Teilnehmer eingehender Ruf nicht direkt an sein Kommunikationsendgerät zugestellt wird.

Im Folgenden wird ein Ausführungsbeispiel mit weiteren Vorteilen und Ausgestaltung der Erfindung näher erläutert.

Unter einem Ruhezustand oder Stand-By-Zustand werden im Folgenden geläufige technischen Verfahren verstanden, welche eine Reduktion des Verbrauchs an elektrischer Energie an einem Kommunikationsendgerät zur Folge haben. Beispiele hierfür sind unter anderem eine Abdunkelung bzw. vollständige Deaktivierung von Ausgabeeinheiten wie z.B. einem Display, ein Hinterlegen momentan im Arbeitsspeicher geladener Daten in einen nicht-flüchtigen Speicher, verbunden mit einem Zurückfahren oder Abschalten eines gerätinternen Prozessors, sowie weitere, auch aus der Datentechnik bekannte Verfahren zum Einleiten eines Ruhezustands.

Ein Ausführungsbeispiel mit Anwendung der erfindungsgemäßen Merkmale betrifft eine sog. »Voice Mail«-Funktion. Bei Umleitung auf eine Voice Mail bzw. Anrufbeantworter wird ein Kommunikationsendgerät in einen Ruhezustand versetzt.

Ein weiterer Fall betrifft eine Umleitung. Unter einer Umleitung wird verstanden, dass ein Teilnehmer eine alternative Zielrufnummer festlegt, an welche eingehende Anrufe durchgestellt werden. Hierbei handelt es sich um ein weiteres Leistungsmerkmal, welches zur Folge hat, dass ein eintreffender Ruf nicht direkt an das für den Teilnehmer vorgesehene Kommunikationsendgerät durchgestellt wird. Auch in diesem Fall ist vorteilhaft ein Ruhestand vorsehbar, welcher eine signifikante Reduktion des elektrischen Energieverbrauchs zur Folge hat.

Ein weiteres Beispiel für ein solches Leistungsmerkmal ist die Funktion »Anrufschutz«. Unter Anrufschutz wird verstanden, dass ein Teilnehmer zwar einen gerufenen zweiten Teilnehmer anrufen kann, aber selbst keine kommenden Rufe erhält.

Die vorgenannten Leistungsmerkmale bzw. Funktionen sowie weitere, nicht genannte Funktionen, welche zur Folge haben, dass ein kommender Ruf nicht direkt an das Kommunikatiohsendgerät des Teilnehmers durchgestellt wird, werden bei ihrer Aktivierung als Auslöser für die Einleitung eines Ruhezustands verwendet. Der Ruhezustand wird am Kommunikationsendgerät eingeleitet und vom Kommunikationsendgerät selbst veranlasst oder alternativ von einer das Kommunikationsendgerät steuernden Kommunikationseinrichtung.

Zur Wahrung eines »Always-on-Device-Charakters«, d.h. zur Gewährleistung einer Bereitschaft des Kommunikationsendgeräts, wird der Ruhezustand möglichst unverzüglich beendet, sobald eine der nachgenannten Situationen eintritt:
- Ein Abheben des Handapparats bzw. »Hörers«
- Bei Betätigung einer beliebigen Taste am Kommunikationsendgerät
- Bei Aktivierung durch die Kommunikationseinrichtung. Eine solche Aktivierung durch die Kommunikationseinrichtung erfolgt beispielsweise über eine spezielle Meldung. Wird die Meldung über ein paketorientiertes Netzwerk, an welches das Kommunikationsendgerät - beispielsweise ein VoIP-Kommunikationsendgerät - angeschlossen ist, übertragen, bezeichnet man diese auch als WOL (»Wakeup On LAN« bzw. »Wakeup On Local Area Network«).

Im Folgenden werden weitere Ausführungsbeispiele des erfindungsgemäßen Verfahrens erläutert.

Eine Funktionstaste wird fest der Funktion »Stand-By aktivieren« zugeordnet. Idealerweise ist in der Kommunikationseinrichtung ein so genanntes Ausfallziel konfiguriert. Diese Konfigurierung eines Ausfallziels bzw. »CFSS-Ziel« hat zur Folge, dass bei einem abgemeldeten bzw. nicht verfügbare Kommunikationsendgerät ein kommender Anruf an dieses Kommunikationsendgerät an das Ausfallziel umgeleitet wird. Ein Ausfallziel ist beispielsweise eine in der Kommunikationseinrichtung vorgesehene Voice Mail. Bei einem Abheben des Handapparats oder bei einer Betätigung einer beliebigen Funktionstaste wechselt das Kommunikationsendgerät vom derzeitigen Ruhezustand in einen aktiven Modus. Im Falle eines so genannten VoIP-Kommunikationsendgeräts (Voice over IP) wird ein aktiver Modus bzw. ein Ruhezustand auch über eine entsprechende, über das paketorientierte Netzwerk übersandte Meldung eingeleitet.

Im Falle einer Festbelegung von Funktionstasten mit Leistungsmerkmalen, wie z.B. Voice Mail, Umleitung, Anruferschutz, kann in der Kommunikationseinrichtung oder im Kommunikationsendgerät selbst eine Verknüpfung der Einleitung vorgenannter Leistungsmerkmale mit einer Aktivierung des Ruhezustands vorgesehen sein.

Im Falle einer freien Programmierbarkeit der Funktionstasten wird die programmierbare »Bedeutung« einer jeweiligen Funktionstaste oftmals in einem nicht-flüchtigen Speicher im Kommunikationsendgerät abgelegt. Bei einer Konfiguration der Funktionstasten durch den Teilnehmer oder auch durch einen Administrator, signalisiert die Kommunikationseinrichtung an das Kommunikationsendgerät, das mit diesen Funktionstasten die Aktivierung des Ruhezustands verbunden ist. Bei einer nicht-flüchtigen Speicherung der Tastenbelegung bzw. »Bedeutung« der Funktionstasten kann jedoch die zusätzliche Kopplung einer gewählten Fünktionstaste mit einem Ruhezustand auch im flüchtigen Speicher des Kommunikationsendgeräts hinterlegt sein. Bei einem Übergang in den aktiven Modus lädt das Kommunikationsendgerät wieder die vorgesehene Funktionstastenbelegung und damit die Kopplung der vorgesehenen Funktionstasten zum Ruhezustand.

Ist keine feste Zuordnung von Leistungsmerkmalen zu festen Funktionstasten vorgesehen, sondern eine freie Programmierbarkeit, signalisiert die Kommunikationseinrichtung an das Kommunikationsendgerät, dass mit einer aktivierten Funktionstaste eine Aktivierung des Ruhezustands verbunden ist. Bei einer nicht-flüchtigen Hinterlegung der Tastenbelegung im Kommunikationsendgerät, steht diese Beziehung der Funktionstaste zum Ruhezustand nach Übergang in den aktiven Modus wieder zur Verfügung.

Alternativ oder zusätzlich wird ein Wechsel in den Ruhezustand zu konfigurierbaren Zeiten automatisch eingeleitet und zu einem weiteren programmierbaren Zustand wieder aufgehoben. Eine solche Funktion kann beispielsweise als Nachtschaltungsfunktion benutzt werden.

Weiterhin kann ein Ruhezustand durch eine Meldung über das paketorientierte Netzwerk, mit welchem das Kommunikationsendgerät verbunden ist, eingeleitet werden. In entsprechender Weise erfolgt eine Beendigung des Ruhezustands bzw. ein Wechsel in den aktiven Modus über eine analoge Meldung.

Das erfindungsgemäße Verfahren zum Eintritt in einen Ruhezustand ist sowohl am Kommunikationsendgerät selbst implementierbar oder auch in der das Kommunikationsendgerät steuernden Kommunikationseinrichtung. Auch eine verteilte oder gemischte Implementierung in Form eines von einer Kommunikationseinrichtung gesteuerten Kommunikationsendgerätes ist eine mögliche Ausführungsform der Erfindung.

Ein Einsatz des erfindungsgemäßen Verfahrens ist insbesondere bei heute gängigen VoIP-Telefonen in Betracht zu ziehen. Derartige Kommunikationsendgeräte verfügen überwiegend über ein großflächiges Farb-Display als Ausgabeeinheit, welche in naher Zukunft einen elektrischen Leistungsbedarf von 10 Watt erreichen.

Ein ununterbrochener Betrieb derartiger Kommunikationsendgeräte würde insbesondere bei der in Firmen eingesetzten großen Zahl von Kommunikationsendgeräten einen erheblichen Einsatz an elektrischer Energie benötigen.

Neben einer unmittelbar einsehbaren finanziellen Auswirkung sowie der ökologischen Probleme eines eigentlich vermeidbaren Energiekonsums stellt sich bei derartigen Kommunikationsendgeräten auch das Problem ein, das eine Versorgung mit elektrischer Energie meist über das Telefonansahlusskabel, beispielsweise eines Tischtelefons, erfolgt.

Auch bei VoIP-Kommunikationsendgeräten erfolgt eine Versorgung mit elektrischer Energie über ein das Kommunikationsendgerät mit einem paketorientierten Netzwerk verbindendes Netzwerkkabel. Die Speisung mit elektrischer Energie über ein Netzwerkkabel wird oftmals auch als »Power over LAN« oder abgekürzt als PoL bezeichnet. Ein steigender Energieverbrauch bedeutet dabei unter Umständen auch erhöhte Investitionen bzw. Re-Investitionen in die Infrastruktur.

Mit den Mitteln der Erfindung werden die oben genannten Probleme vermindert oder gelöst.

## Patentansprüche

1. Verfahren zum Betrieb eines Kommunikationsendgeräts, bei dem ein Abschalten nicht vorgesehen ist, mit folgenden Schritten
a) Detektion einer Aktivierung eines Leistungsmerkmals, welches zur Folge hat, dass eine an das Kommunikationsendgerät gerichtete Kommunikationsverbindung zumindest vorübergehend nicht direkt an das Kommunikationsendgerät durchgestellt wird **gekennzeichnet durch** den Schritt
b) **durch** das Leistungsmerkmal ausgelöster Übergang in einen Stand-By-Zustand bei Aktivierung des Leistungsmerkmals, wobei der Stand-By-Zustand von dem Kommunikationsendgerät und/oder von einer das Kommunikationsendgerät steuernden Kommunikationseinrichtung veranlasst wird.

2. Verfahren nach Anspruch 1,
wobei das Kommunikationsendgerät ein drahtgebundenes Tischtelefon ist.

3. Verfahren nach einem der Ansprüche 1 bis 2,
wobei die in a) genannten Leistungsmerkmale eine Umleitung und/oder einen Anrufschutz umfassen.

4. Verfahren nach einem der vorgenannten Ansprüche,
wobei in Folge einer am Kommunikationsendgerät durchgeführten Bedienungshandlung ein Wechsel vom Stand-By-Zustand in einen aktiven Modus erfolgt.

5. Verfahren nach einem der vorgenannten Ansprüche,
wobei in Folge einer durch die das Kommunikationsendgerät steuernde Kommunikationseinrichtung übermittelten Anforderung ein Wechsel vom Stand-By-Zustand in einen aktiven Modus erfolgt.

6. Verfahren nach einem der vorgenannten Ansprüche,
wobei ein Verlassen des Stand-By-Zustands bei einem der folgenden Aktionen veranlasst wird:
- Bei einem Abheben eines Handapparats an dem Kommunikationsendgerät und/oder
- Bei Betätigung einer beliebigen Taste am Kommunikationsendgerät und/oder
- Bei Aktivierung durch die das Kommunikationsendgerät steuernde Kommunikationseinrichtung.

7. Verfahren nach Anspruch 6,
wobei nach dem Abheben des Handapparats, wenn sich das Kommunikationsendgerät im Stand-By-Zustand befindet und in einen aktiven Modus wechselt, ein Tonsignal ausgegeben wird, das akustisch einem "Freizeichen" entspricht.

8. Kommunikationsendgerät, bei dem ein Abschalten nicht vorgesehen ist, mit Mittel zur Detektion einer Aktivierung eines Leistungsmerkmals, welches zur Folge hat, dass eine an das Kommunikationsendgerät gerichtete Kommunikationsverbindung zumindest vorübergehend nicht direkt an das Kommunikationsendgerät gerichtet wird,
**gekennzeichnet durch** Stand-By-Zustandsübergangsmittel zum **durch** das Leistungsmerkmal ausgelösten Übergang in einen Stand-By-Zustand bei Aktivierung des Leistungsmerkmals, wobei der Stand-By-Zustand von dem Kommunikationsendgerät und/oder von einer das Kommunikationsendgerät steuernden Kommunikationseinrichtung veranlasst ist.

9. Kommunikationsendgerät nach Anspruch 8,
ausgestaltet als drahtgebundenes Tischtelefon.

10. Kommunikationsendgerät nach Anspruch 8 oder 9,
wobei es eine paketorientierte Verbindung aufweist.

11. Kommunikationsendgerät nach Anspruch 8,
ausgestaltet als Tischtelefon mit Mittel zum Eintritt in einen Stand-By-Zustand, wobei die Mittel zum Eintritt in den Stand-By-Zustand abhängig von einem aktivierten Leistungsmerkmal aktivierbar sind.

12. Kommunikationsendgerät nach Anspruch 11,
wobei die Mittel zum Eintritt in den Stand-By-Zustand von der Kommunikationseinrichtung aktivierbar sind.

13. Kommunikationsendgerät nach einem der Ansprüche 11 oder 12,
wobei die Mittel zum Eintritt in den Stand-By-Zustand zeitabhängig aktivierbar sind.

14. Kommunikationsendgerät nach einem der Ansprüche 8 bis 13 mit einem Tonausgabemittel zum Ausgeben eines Tonsignals, das akustisch einem "Freizeichen" entspricht, nach einem Abheben eines Handapparats an dem Kommunikationsendgerät, welches sich im Stand-By-Zustand befindet und in einen aktiven Modus wechselt.

## Claims

1. Method for operating a communication terminal, in which disconnection is not provided for, having the following steps
a) detection of an activation of a performance feature, which has the result that a communication connection directed to the communication terminal is at least temporarily not put through directly to the communication terminal
**characterized by** the step
b) transition initiated by the performance feature, to a stand-by state in the case of activation of the performance feature, wherein the stand-by state is initiated by the communication terminal and/or by a communication device controlling the communication terminal.

2. Method according to Claim 1,
wherein the communication terminal is is a wired desk telephone.

3. Method according to either of Claims 1 to 2,
wherein the performance features mentioned in a) include rerouting and/or call protection.

4. Method according to any one of the preceding claims,
wherein, following an operation action performed on the communication terminal, a switch from the stand-by state to an active mode is carried out.

5. Method according to any one of the preceding claims,
wherein, following a request transmitted by the communication device controlling the communication terminal, a switch from the stand-by state to an active mode is carried out.

6. Method according to any one of the preceding claims,
wherein leaving the stand-by state is initiated in the case of one of the following actions:
- in the case of the picking up of a hand set on the communication terminal and/or
- in the case of the actuation of any key on the communication terminal and/or
- in the case of activation by the communication device controlling the communication terminal.

7. Method according to Claim 6,
wherein, after the picking up of the hand set, when the communication terminal is in the stand-by state and switches to an active mode, a sound signal is emitted which acoustically corresponds to a "dial tone."

8. Communication terminal, in which disconnection is not provided for, with means for the detection of an activation of a performance feature, which has the effect that a communication connection directed to the communication terminal is at least temporarily not directed directly to the communication terminal,
**characterized by** stand-by state transition means for the transition, initiated by the performance feature, to a stand-by state in the case of actuation of the performance feature, wherein the stand-by state is initiated by the communication terminal and/or by a communication device controlling the communication terminal.

9. Communication terminal according to Claim 8,
configured as a wired desk telephone.

10. Communication terminal according to Claim 8 or 9,
wherein it comprises a packet-oriented connection.

11. Communication terminal according to Claim 8,
configured as a desk telephone with means for entering a stand-by state, wherein the means for entering the stand-by state can be activated depending on an activated performance feature.

12. Communication terminal according to Claim 11,
wherein the means for entering the stand-by state can be activated by the communication device.

13. Communication terminal according to Claim 11 or 12,
wherein the means for entering the stand-by state can be activated in a time-dependent manner.

14. Communication terminal according to any one of Claims 8 to 13
with a sound emitting means for emitting a sound signal which acoustically corresponds to a "dial tone," after the picking up of a hand set on the communication terminal which is in the stand-by state and switches to an active mode.

## Revendications

1. Méthode pour exploiter un terminal de communication, dans laquelle il n'est pas prévu de déconnexion, comprenant les étapes suivantes
a) détection d'une activation d'une caractéristique technique, ce qui a pour effet de ne pas faire transiter directement, au moins provisoirement, une connexion de communication adressée au terminal de communication via le terminal de communication,
**caractérisée par** l'étape
b) transition initiée par la caractéristique technique, en mode d'attente dans le cas d'une activation de la caractéristique technique, dans laquelle le mode d'attente est initié par le terminal de communication et/ou par un dispositif de communication qui commande le terminal de communication.

2. Méthode selon la revendication 1,
dans laquelle le terminal de communication est un poste téléphonique de table.

3. Méthode selon l'une des revendications 1 ou 2,
dans laquelle les caractéristiques techniques mentionnées à l'étape a) incluent le renvoi et/ou la protection d'appels.

4. Méthode selon l'une des revendications précédentes au choix,
dans laquelle, suite à une action de commande exécutée sur le terminal de communication, une transition du mode d'attente à un mode actif est opérée.

5. Méthode selon l'une quelconque des revendications précédentes,
dans laquelle, suite à une demande transmise par le dispositif de communication qui commande le terminal de communication, une transition du mode d'attente à un mode actif est opérée.

6. Méthode selon l'une quelconque des revendications précédentes,
dans laquelle le maintien du mode d'attente est initié dans le cas où l'une des actions suivantes est exécutée :
- un combiné est décroché sur le terminal de communication et/ou
- une touche quelconque est actionnée sur le terminal de communication et/ou
- le dispositif de communication qui commande le terminal de communication est activé.

7. Méthode selon la revendication 6,
dans laquelle, après le décrochage du combiné, lorsque le terminal de communication est en mode d'attente et passe à un mode actif, un signal sonore est émis qui correspond de façon acoustique à une « tonalité de numérotation ».

8. Terminal de communication, dans lequel il n'est pas prévu de déconnexion, disposant de capacités de détection d'une activation d'une caractéristique technique, ce qui a pour effet de ne pas faire transiter directement, au moins provisoirement, une connexion de communication adressée au terminal de communication via le terminal de communication,
**caractérisé par** des capacités de transition du mode d'attente pour la transition initiée par la caractéristique technique, en mode d'attente dans le cas d'une activation de la caractéristique technique, dans laquelle le mode d'attente est initié par le terminal de communication et/ou par un dispositif de communication qui commande le terminal de communication.

9. Terminal de communication selon la revendication 8,
configuré sous la forme d'un poste téléphonique de table.

10. Terminal de communication selon la revendication 8 ou 9,
dans lequel une connexion orientée paquets est utilisée.

11. Terminal de communication selon la revendication 8,
configuré sous la forme d'un poste téléphonique de table et disposant des capacités d'entrer en mode d'attente, dans lequel les capacités d'entrer en mode d'attente peuvent être activées en fonction d'une caractéristique de performance activée.

12. Terminal de communication selon la revendication 11,
dans lequel les capacités d'entrer en mode d'attente peuvent être activées par le dispositif de communication.

13. Terminal de communication selon la revendication 11 ou 12,
dans lequel les capacités d'entrer en mode d'attente peuvent être activées en fonction du temps.

14. Terminal de communication selon l'une quelconque des revendications 8 à 13,
avec des capacités d'émission de son pour émettre un signal sonore qui correspond de façon acoustique à une « tonalité de numérotation », après le décrochage d'un combiné sur le terminal de communication, qui est en mode d'attente et passe à un mode actif.
